# EUROPEAN PATENT APPLICATION

(11) **EP 4 279 178 A1**
(43) Date of publication of application: **22.11.2023**
(21) Application number: 21919541.9
(22) Date of filing: 08.11.2021
(51) Int. Cl.: B01J 35/02, C01G 23/047, B01J 37/12

(54) **METHOD FOR MANUFACTURING TITANIUM OXIDE SEMICONDUCTOR**

(30) Priority: 15.01.2021 JP 2021004588
(71) Applicant: Shiken Co., Ltd., Osaka-shi Osaka 543-0045 (JP)
(72) Inventor: IKEJIRI, Takahiro, Osaka-shi, Osaka 543-0045 (JP); TANAKA, Ryota, Osaka-shi, Osaka 543-0045 (JP); TSUKADA, Shinya, Osaka-shi, Osaka 543-0045 (JP); ENDO, Yoshikazu, Osaka-shi, Osaka 543-0045 (JP); KOMINAMI, Hiroshi, Higashiosaka-shi, Osaka 577-8502 (JP)
(74) Representative: Meissner Bolte Partnerschaft mbB
(86) International application number: PCT/JP2021/040971
(87) International publication number: WO 2022/153650

(57) **Abstract**

Provided is a method for manufacturing a titanium dioxide semiconductor. The method does not require a complicated pretreatment and makes it possible to easily manufacture a titanium dioxide semiconductor with general-purpose devices. The method for manufacturing a titanium dioxide semiconductor includes: a first immersion step of immersing a substrate containing titanium in hydrogen peroxide water at 70 °C or higher and 90 °C or lower for 1 hour or more and 28 hours or less, and a second immersion step. The second immersion step includes a normal temperature water immersion step of immersing the substrate subjected to the first immersion step in normal temperature water at 10 °C or higher and 30 °C or lower for 24 hours or more and 48 hours or less, and a hot water immersion step of immersing the substrate subjected to the normal temperature water immersion step in hot water at 70 °C or higher and 90 °C or lower for 24 hours or more and 96 hours or less.

## Description

### TECHNICAL FIELD

The present invention relates to a method for manufacturing a titanium dioxide semiconductor.

A titanium dioxide semiconductor has been known to have, for example, an oxidative decomposition performance of an organic substance, and a superhydrophilicity and the like as a photocatalyst. The oxidative decomposition performance of the titanium dioxide semiconductor can be used for antibacterial and deodorizing applications and the like, and the superhydrophilicity can be used, for example, for an antifouling application. The titanium dioxide semiconductor can be manufactured, for example, by methods described in Patent Documents 1 and 2 below.

A method for manufacturing a titanium dioxide film including a treatment step with hydrogen peroxide and a treatment step with water (for example, Patent Document 3), and crystallization of amorphous titania into anatase by treatments with hydrogen peroxide, normal temperature water, and hot water have been known (for example, Non-Patent Document 1).

### PRIOR ART DOCUMENTS

### PATENT DOCUMENTS

Patent Document 1: JP-A-2000-271493
Patent Document 2: JP-B-3795515
Patent Document 3: CN-C-1252310 specification

### NON PATENT DOCUMENTS

Non-Patent Document 1: Jin-Ming WU, et al., Crystallization of Anatase from Amorphous Titania in Hot Water and In Vitro Biomineralization, Journal of the Ceramic Society of Japan, 110[2],78-80(2002)

### SUMMARY OF THE INVENTION

### PROBLEMS TO BE SOLVED BY THE INVENTION

In the method for manufacturing a photocatalytic material described in Patent Document 1, metallic titanium subjected to an anodization treatment is burned in the air at 500 °C, but the pretreatment step is complicated, which cannot be said to be practical.

According to the method for manufacturing a photoelectrochemical cell semiconductor described in Patent Document 2, a substrate made of titanium or a titanium alloy is burned in the air at 700 to 1000 °C at a temperature rising rate of 5 °C/sec or more to form a titanium oxide layer on the surface of the substrate, and then rapidly cooled in cold water at 10 °C or less, and therefore a photoelectrochemical cell semiconductor (titanium dioxide semiconductor) having an excellent photocatalytic reactivity can be manufactured without performing an anodic oxidation treatment. However, in order to perform firing at 700 to 1000 °C, relatively large-scale equipment is required, which causes increased cost. There has been a demand for a titanium dioxide semiconductor having a more excellent photocatalytic reactivity.

Patent Document 3 describes that an anatase crystal titanium dioxide film can be manufactured on the surface of metal titanium by immersing the metal titanium in hydrogen peroxide water having a temperature of 60 to 90 °C and a concentration of 12 to 30 % by mass for 2 to 72 hours and then keeping the metal titanium in water at 80 °C for 0 to 72 hours. However, Patent Document 3 does not describe a step of treating with normal temperature water before treating with hot water. Furthermore, in Patent Document 3, there is only a general description that a titanium dioxide thin film can be applied to the field of a photocatalyst, and whether or not the titanium dioxide film obtained by the manufacturing method of Patent Document 3 has a photocatalytic reactivity is not studied at all.

Non-Patent Document 1 describes that titanium and a titanium alloy are widely used as orthopedic and dental implant materials from the viewpoint of a low specific gravity, excellent abrasion resistance, corrosion resistance, excellent biocompatibility, and a long fatigue life, but no study has been made on a photocatalytic reactivity. Non-Patent Document 1 discloses that a titanium sheet is immersed in an H₂O₂ solution having a concentration of 30 % by mass for 8 hours, and then immersed in water at room temperature for 12 hours and water at 80 °C for 3 days to obtain an anatase layer having good crystallinity, but there is no description of matters that can be considered as a technical idea, such as specific methods, procedures, and conditions for exhibiting a good photocatalytic reactivity.

The present inventors have found that a sufficient photocatalytic reactivity cannot be obtained under the treatment conditions described in Non-Patent Document 1. That is, Non-Patent Document 1 merely discloses a titanium material as the orthopedic and dental implant materials, and does not disclose any photocatalytic effect or relationship between an immersion time and a photocatalytic effect.

The present invention provides a method for manufacturing a titanium dioxide semiconductor. The method does not require a complicated pretreatment and makes it possible to easily manufacture a titanium dioxide semiconductor having an excellent photocatalytic reactivity with general-purpose devices.

### MEANS FOR SOLVING THE PROBLEMS

A method for manufacturing a titanium dioxide semiconductor of the present invention, includes:
a first immersion step of immersing a substrate containing titanium in hydrogen peroxide water at 70 °C or higher and 90 °C or lower for 1 hour or more and 28 hours or less, and
a second immersion step of immersing the substrate subjected to the first immersion step in water for 24 hours or more and 96 hours or less.

In an aspect of the present invention, the temperature of the water of the second immersion step is 70 °C or higher and 90 °C or lower.

A method for manufacturing a titanium dioxide semiconductor of the present invention, includes:
a first immersion step of immersing a substrate containing titanium in hydrogen peroxide water at 70 °C or higher and 90 °C or lower for 1 hour or more and 28 hours or less; and
a second immersion step,
wherein the second immersion step includes a normal temperature water immersion step of immersing the substrate subjected to the first immersion step in normal temperature water at 10 °C or higher and 30 °C or lower for 24 hours or more and 48 hours or less, and a hot water immersion step of immersing the substrate subjected to the normal temperature water immersion step in hot water at 70 °C or higher and 90 °C or lower for 24 hours or more and 96 hours or less.

In an aspect of the present invention, a concentration of hydrogen peroxide in the hydrogen peroxide water is 20 % by mass or more and 45 % by mass or less.

In one aspect of the present invention, the titanium dioxide semiconductor has a photocatalytic reactivity.

### EFFECT OF THE INVENTION

A method for manufacturing a titanium dioxide semiconductor of the present invention does not require a complicated pretreatment and makes it possible to easily manufacture a titanium dioxide semiconductor having an excellent photocatalytic reactivity with general-purpose devices.

### MODE FOR CARRYING OUT THE INVENTION

A method for manufacturing a titanium dioxide semiconductor according to the present embodiment includes a first immersion step of immersing a substrate containing titanium in hydrogen peroxide water at 70 °C or higher and 90 °C or lower for 1 hour or more and 28 hours or less, and a second immersion step of immersing the substrate subjected to the first immersion step in water for 24 hours or more and 96 hours or less. The method for manufacturing a titanium dioxide semiconductor of the present embodiment does not require a complicated pretreatment and makes it possible to easily manufacture a titanium dioxide semiconductor having an excellent photocatalytic reactivity with general-purpose devices.

### <First immersion step>

The first immersion step is a step of immersing a substrate containing titanium in hydrogen peroxide water at 70 °C or higher and 90 °C or lower for 1 hour or more and 28 hours or less.

The substrate contains titanium. The substrate is preferably a substrate made of titanium or a titanium alloy from the viewpoint of obtaining a titanium dioxide semiconductor having an excellent photocatalytic reactivity. The shape of the substrate is not particularly limited to a plate shape, a rod shape, and a block shape and the like, and is appropriately selected according to the application.

The substrate to be used is preferably washed with water or an organic solvent in advance. The organic solvent used for washing the substrate is not particularly limited, and examples thereof include acetone and methanol. The surface of the substrate can be polished as necessary.

The temperature of the hydrogen peroxide water in which the substrate is immersed is 70 °C or higher, and preferably 75 °C or higher, from the viewpoint of obtaining a titanium dioxide semiconductor having an excellent photocatalytic reactivity. The temperature of the hydrogen peroxide water in which the substrate is immersed is 90 °C or lower, and preferably 85 °C or lower, from the viewpoint of manufacturing efficiency.

The concentration of hydrogen peroxide in the hydrogen peroxide water used in the first immersion step is preferably 15 % by mass or more, more preferably 20 % by mass or more, and still more preferably 25 % by mass or more, from the viewpoint of obtaining a titanium dioxide semiconductor having an excellent photocatalytic reactivity. The concentration of the hydrogen peroxide in the hydrogen peroxide water used in the first immersion step is preferably 45 % by mass or less, and more preferably 40 % by mass or less, from the same viewpoint.

In the first immersion step, a time for immersing the substrate in hydrogen peroxide water is 1 hour or more, and preferably 4 hours or more, from the viewpoint of obtaining a titanium dioxide semiconductor having an excellent photocatalytic reactivity. In the first immersion step, the time for immersing the substrate in hydrogen peroxide water is preferably 28 hours or less, and more preferably 12 hours or less, from the viewpoint of manufacturing efficiency.

### <Second immersion step>

The second immersion step is a step of immersing the substrate subjected to the first immersion step in water for 24 hours or more and 96 hours or less.

Specific examples of the water in which the substrate is immersed in the second immersion step include distilled water, deionized water, pure water, tap water, and industrial water, and from the viewpoint of easy availability, distilled water or deionized water is preferable.

In the second immersion step, a time for immersing the substrate in water is 24 hours or more, and preferably 36 hours or more, from the viewpoint of obtaining a titanium dioxide semiconductor having an excellent photocatalytic reactivity. The time for immersing the substrate in water in the second immersion step is 96 hours or less from the viewpoint of manufacturing efficiency.

The water used in the second immersion step is preferably hot water at 70 °C or higher, and more preferably 75 °C or higher, from the viewpoint of obtaining a titanium dioxide semiconductor having an excellent photocatalytic reactivity, and is preferably hot water at 90 °C or lower, and more preferably 85 °C or lower, from the viewpoint of manufacturing efficiency.

In the second immersion step, the substrate may be immersed in water at normal temperature (hereinafter, also simply referred to as "normal temperature water") before being immersed in the hot water. That is, the second immersion step may include a normal temperature water immersion step of immersing the substrate in normal temperature water, and a hot water immersion step of immersing the substrate in the hot water after the normal temperature water immersion step.

In the normal temperature water immersion step, a time for immersing the substrate in normal temperature water is preferably 12 hours or more, and more preferably 17 hours or more, from the viewpoint of obtaining a titanium dioxide semiconductor having an excellent photocatalytic reactivity. The time is more preferably 24 hours or more from the viewpoint of obtaining a titanium dioxide semiconductor having a more excellent photocatalytic reactivity. The time for immersing the substrate in normal temperature water is preferably 48 hours or less, and may be 24 hours or less, from the viewpoint of obtaining a titanium dioxide semiconductor having an excellent photocatalytic reactivity.

The temperature of the normal temperature water used in the normal temperature water immersion step is preferably 10 °C or higher, and more preferably 13 °C or higher, from the viewpoint of obtaining a titanium dioxide semiconductor having an excellent photocatalytic reactivity. The temperature of the normal temperature water used in the normal temperature water immersion step is preferably 30 °C or lower, and more preferably 25 °C or lower, from the viewpoint of manufacturing efficiency.

In the hot water immersion step, a time for immersing the substrate in hot water is preferably 24 hours or more from the viewpoint of obtaining a titanium dioxide semiconductor having an excellent photocatalytic reactivity. The time is more preferably 48 hours or more from the viewpoint of obtaining a titanium dioxide semiconductor having a more excellent photocatalytic effect. In the hot water immersion step, a time for immersing the substrate in hot water is preferably 96 hours or less, and more preferably 72 hours or less, from the viewpoint of obtaining a titanium dioxide semiconductor having an excellent photocatalytic reactivity.

The titanium dioxide semiconductor manufactured by the method for manufacturing a titanium dioxide semiconductor according to the present embodiment has an excellent photocatalytic reactivity. Here, examples of an index indicating the photocatalytic reactivity include acetic acid decomposition evaluation described in Examples. The acetic acid decomposition evaluation described in Examples shows that the photocatalytic reactivity is higher as the amount of generated carbon dioxide is larger. The titanium dioxide semiconductor according to the present invention can be used in a wide range of fields, and can be suitably used in a field requiring a higher photocatalytic effect.

### EXAMPLES

### <Preparation of evaluation sample>

### [Example 1]

A substrate composed of rod-shaped pure titanium (99.5 % by mass) having a diameter of about 3 mm and a length of about 80 mm was washed with distilled water and acetone, dried, and then immersed in 30 % by mass hydrogen peroxide water at about 80 °C for 1 hour in a 250 mL polypropylene container. Thereafter, the substrate was immersed in water at normal temperature (about 15 °C) for 24 hours, and then immersed in water at about 80 °C for 48 hours to obtain an evaluation sample according to Example 1.

### [Examples 2 to 5, Comparative Examples 1 and 2, Reference Examples 2 to 51

Evaluation samples according to Examples 2 to 5, Comparative Examples 1 and 2, and Reference Examples 2 to 5 were obtained in the same manner as in Example 1 except that the contents of the immersion steps were changed to contents shown in Table 1.

### [Comparative Example 3]

A substrate composed of rod-shaped pure titanium (99.5 % by mass) having a diameter of about 3 mm and a length of about 80 mm was acid-washed with a hydrofluoric acid solution in advance, dried, then heated and burned in the air at 800 °C for 4 minutes at a temperature rising rate of 7 °C/sec in an electric furnace, and rapidly cooled with cold water at about 10 °C to obtain an evaluation sample according to Comparative Example 3.

### <Evaluation>

### [Acetic acid decomposition evaluation]

### [Examples 1 to 5, Comparative Examples 1 to 3, Reference Examples 2 to 51

Each of four evaluation samples according to each of Examples 1 to 5, Comparative Examples 1 to 3, and Reference Examples 2 to 5 was placed in a test tube having a diameter of 20 mm, and 15 mL of water containing 100 µmol of acetic acid was placed in the test tube. In order to further promote the decomposition of the acetic acid, while oxygen bubbling was performed in a liquid phase in the test tube for 20 minutes and in a gas phase for 10 minutes using a bubbling device and a polyethylene tube connected to a gas cylinder, the evaluation sample was irradiated with light at a wavelength of 368 nm and 6 W for 24 hours with black light in a dark room so as to cause no temperature influence of heat generation by the black light. The amount of carbon dioxide generated by the decomposition of acetic acid by the photocatalytic reactivity of the evaluation sample was measured by gas chromatography.

### [Comparative Example 4]

The acetic acid decomposition evaluation was performed in the same manner as in Example 1 except that a substrate made of rod-shaped pure titanium (99.5 % by mass) having a diameter of about 3 mm and a length of about 80 mm before the treatment according to Example 1 was performed was used.

### [Reference Example 1]

The acetic acid decomposition evaluation was performed without immersing the evaluation sample in acetic acid.

The measurement results are shown in Table 1.

**[Table 1]**

| | First immersion step | | | Second immersion step | | | | Evaluation |
|---|---|---|---|---|---|---|---|---|
| | | | | Normal temperature immersion step | Hot water immersion step | | Total immersion time (hour (s)) | Acetic acid decomposition evaluation |
| | H₂O₂ concentration (% by mass) | H₂O₂ water temperature (°C) | Immersion time (hour (s)) | Immersion time (hour(s)) | Temperature (°C) | Immersion time (hour(s)) | | Amount of CO₂ generated (pmol) |
| Comparative Example 1 | 30 | 80 | 0 | 24 | 80 | 48 | 72 | 5.7 |
| Comparative Example 2 | 30 | 80 | 0.5 | 24 | 80 | 48 | 72 | 8.0 |
| Example 1 | 30 | 80 | 1 | 24 | 80 | 48 | 72 | 31.2 |
| Example 2 | 30 | 80 | 4 | 24 | 80 | 72 | 96 | 33.9 |
| Example 3 | 30 | 80 | 4 | 48 | 80 | 48 | 96 | 28.0 |
| Example 4 | 30 | 80 | 12 | 24 | 80 | 48 | 72 | 36.6 |
| Example 5 | 15 | 80 | 4 | 24 | 80 | 48 | 72 | 31.2 |
| Comparative Example 3 | Burned rod-shaped pure titanium | | | | | | | 6.6 |
| Comparative Example 4 | Untreated rod-shaped pure titanium | | | | | | | 4.4 |
| Reference Example 1 | Only acetic acid (no evaluation sample: blank test) | | | | | | | 2.1 |
| Reference Example 2 | 30 | 80 | 4 | 0 | 80 | 72 | 72 | 25.7 |
| Reference Example 3 | 30 | 80 | 4 | 24 | 80 | 0 | 24 | 14.5 |
| Reference Example 4 | 30 | 80 | 28 | 17 | 80 | 24 | 41 | 23.4 |
| Reference Example 5 | 30 | 80 | 8 | 12 | 80 | 72 | 84 | 9.5 |

The evaluation samples according to Examples 1 to 5 included in the claims of the present application have a larger production amount of carbon dioxide and a more excellent acetic acid decomposition action than those of the evaluation samples according to Comparative Examples 1 to 4 outside the claims of the present application, and therefore the evaluation samples according to Examples 1 to 5 are found have an excellent photocatalytic reactivity. In Reference Example 2, the evaluation sample was prepared by the same steps as in Example 2 except that a normal temperature water immersion step was not included, but the photocatalytic reactivity of Reference Example 2 was found to be inferior to that of Example 2 treated by a normal temperature water immersion step and a hot water immersion step. In Reference Example 3, the evaluation sample was prepared by the same steps as in Example 2 except that the hot water immersion step was not included, but Reference Example 3 was found to have a production amount of carbon dioxide equal to or less than half of that in Example 2, and have an inferior photocatalytic reactivity. It was found that under the treatment conditions shown in Reference Examples 4 and 5, the amount of carbon dioxide generated is small, and a sufficient photocatalytic reactivity is not obtained.

### INDUSTRIAL APPLICABILITY

The titanium dioxide semiconductor according to the present invention has a photocatalytic reactivity, can be widely used in the food industry, the chemical industry, the medical industry, and the environmental equipment industry and the like.

## Claims

1. A method for manufacturing a titanium dioxide semiconductor,
comprising:
- a first immersion step of immersing a substrate containing titanium in hydrogen peroxide water at 70 °C or higher and 90 °C or lower for 1 hour or more and 28 hours or less; and
- a second immersion step,
- wherein the second immersion step includes a normal temperature water immersion step of immersing the substrate subjected to the first immersion step in normal temperature water at 10 °C or higher and 30 °C or lower for 24 hours or more and 48 hours or less, and a hot water immersion step of immersing the substrate subjected to the normal temperature water immersion step in hot water at 70 °C or higher and 90 °C or lower for 24 hours or more and 96 hours or less.

2. The method for manufacturing a titanium dioxide semiconductor according to claim 1,
wherein a concentration of hydrogen peroxide in the hydrogen peroxide water is 20 % by mass or more and 45 % by mass or less.

3. The method for manufacturing a titanium dioxide semiconductor according to claim 1 or 2,
wherein the titanium dioxide semiconductor has a photocatalytic reactivity.
